# EUROPÄISCHE PATENTANMELDUNG

(11) **EP 1 269 857 A2**
(43) Veröffentlichungstag der Anmeldung: **02.01.2003**
(21) Anmeldenummer: 02013373.2
(22) Anmeldetag: 19.06.2002
(51) Int. Cl.: A23L 1/03, A21D 13/08, A23P 1/08, A23G 3/00

(54) **Masse zum Füllen, Belegen oder Überziehen von Lebensmitteln enthaltend probiotische Mikroorganismen**

(30) Priorität: 26.06.2001 DE 20110409 U
(71) Anmelder: Wikana Keks- und Nahrungsmittel GmbH, 06886 Lutherstadt Wittenberg (DE)
(72) Erfinder: Fischer, Wolfgang, D-06110 Halle (DE)
(74) Vertreter: Heitsch, Wolfgang

(57) **Zusammenfassung**

Die Erfindung betrifft eine Masse zum Füllen, Belegen oder Überziehen von Lebensmitteln, vorzugsweise von Dauerbackwaren, Hartkeksen, Mürbkeksen, Kleingebäck, Feinbackwaren, Crackern, Cornflakes, Zwieback, Chips, Biskuits, Popkorn, Konfekt und Pralinen in beliebiger Ausgestaltungsform zur Förderung von körperlichem Wohlbefinden.

Erfindungsgemäß wird eine Masse vorgeschlagen, die versetzt ist mit an sich bekannten handelsüblichen probiotischen Mikroorganismen des Joghurt-Erzeugnisse herstellenden Typs oder des Sauermilch-Erzeugnisse herstellenden Typs, vorzugsweise der Gattung Lactobacillus (Lb) aus der Familie Lactobacillaceae.

## Beschreibung

### Masse für Lebensmittel

Die Erfindung betrifft eine Masse zum Füllen, Belegen oder Überziehen von Lebensmitteln, vorzugsweise von Dauerbackwaren, Hartkeksen, Mürbkeksen, Kleingebäck, Feinbackwaren, Crackern, Cornflakes, Zwieback, Chips, Biskuits, Popkorn, Konfekt und Pralinen in beliebiger Ausgestaltungsform zur Förderung von körperlichem Wohlbefinden.

Auf Grund der immer gesundheitsbewusster werdenden Verbraucher werden immer mehr Lebensmittel mit Zusätzen zur Gesundheitsförderung bzw. Gesundheitserhaltung aber auch zur Steigerung des körperlichen Wohlbefindens versehen. Es werden im Stand der Technik Nahrungsmittel beschrieben, welche mit Kräutern in frischer oder getrockneter Form, grob oder fein zerkleinert, versetzt werden. So wird in der DE-OS 27 31 025 ein Kräuterbrot offenbart, wobei die Kräuter mit dem Brotteig vermischt und in üblicher Weise gebacken werden.

In der DE 197 02 089 A1 werden Backwaren zur Förderung von körperlichem Wohlbefinden mit im Getreidemehl enthaltenen Bestandteilen vorgeschlagen, wobei diese Mikroorganismen des Joghurt-Erzeugnisse herstellenden Typs oder des Sauermilch-Erzeugnisse herstellenden Typs enthalten.

Die DE 43 40 485 A1 beschreibt industriell vorgefertigte Nahrungsmittel, die eine pharmakologische Wirkung im Magen- und Darmbereich durch den Einsatz wasserlöslicher Alkali- oder Ammoniumhuminate entfalten.

In der EP 0 087 669 B1 wird ein Nahrungskonzentrat auf der Grundlage von Honig beschrieben, welches ein geeignetes Verhältnis von Eiweiß, Fett, Kohlenhydraten aufweist und entweder zur Alleinversorgung oder als Ausgleichsnahrungsmittel Verwendung finden soll.

Aufgabe der Erfindung ist es, dem Verbraucher Lebensmittel zur Verfügung zu stellen, die mit einer Masse gefüllt, belegt oder überzogen sind, wobei die Masse einen gesundheitsfördernden und das Wohlbefinden des Verzehrers steigernden Effekt haben soll. Eine Mindesthaltbarkeit von wenigstens neun Monaten soll erreicht werden.

Erfindungsgemäß wird zum Füllen, Belegen oder Überziehen von Lebensmitteln, vorzugsweise von Dauerbackwaren, Hartkeksen, Mürbkeksen, Kleingebäck, Feinbackwaren, Crackern, Cornflakes, Zwieback, Chips, Biskuits, Popkorn, Konfekt und Pralinen, eine Masse vorgeschlagen, die versetzt ist mit an sich bekannten handelsüblichen probiotischen Mikroorganismen des Joghurt-Erzeugnisse herstellenden Typs oder des Sauermilch-Erzeugnisse herstellenden Typs, vorzugsweise der Gattung Lactobacillus (Lb) aus der Familie Lactobacillaceae. Die weiteren Hauptbestandteile der Masse sind Süßmittel, Fett und Molkereiprodukte. Weiterhin kommen Zusatzstoffe wie Gewürze, Aromen, Pflanzenpulver, Säuerungsmittel, Emulgatoren, Mineralstoffe, Vitamine, eiweißreiche Mikroorganismen zum Einsatz und werden je nach Bedarf und Verwendung der Masse hinzugegeben und sind auch mit Teilen der Hauptbestandteile untereinander austausch- und kombinierbar.

In vorteilhafter Weise können probiotische Mikroorganismen die Darmflora beeinflussen und bestimmte Darmerkrankungen wie Durchfall verhindern oder lindern. Sie unterdrücken pathogene Bakterien, die Produktion organischer Säuren und antimikrobieller Substanzen im Darm des Verbrauchers. Auch die Agglutination pathogener Mikroorganismen, die Stimulation immunologischer Mechanismen und die Konkurrenz der Bakterien um Nährstoffe und fermentierbare Substanzen sowie um Bindungsstellen an den Zelloberflächen der Darmschleimhaut führen zu einer positiven Beeinflussung der Darmflora.

Die Merkmale der Erfindung gehen außer aus den Ansprüchen auch aus der Beschreibung und der Zeichnung hervor, wobei die einzelnen Merkmale jeweils für sich allein oder zu mehreren in Form von Unterkombinationen schutzfähige Ausführungen darstellen, für die hier Schutz beansprucht wird.

In der zugehörigen Zeichnung zeigen:
- Fig. 1 -: Gebäck im Schnitt mit erfindungsgemäßer Masse als Belag,
- Fig. 2 -: Sandwichartiges Gebäck im Schnitt mit erfindungsgemäßer Masse als Zwischenfüllung,
- Fig. 3 -: Praline im Schnitt mit erfindungsgemäßer Masse als Füllung,
- Fig. 4 -: Kartoffelchip im Schnitt, umhüllt mit erfindungsgemäßer Masse.

Die bereits erwähnten Hauptbestandteile der erfindungsgemäßen Masse zum Füllen, Belegen oder Überziehen von Lebensmitteln werden nachfolgend näher erläutert: Je nach gewünschter Beschaffenheit, Geschmack, Verwendungszweck, bevorzugter Mindesthaltbarkeit, Konsistenz und Farbe der Masse werden die Hauptbestandteile nach definierten Gewichtsteilen (GWT) zusammengesetzt.

Als Süßmittel werden beispielsweise Rohr- oder Rübenzucker, Honig, Sirupe, Fruchtzucker und/oder Topinambur verwendet. Als Fette werden pflanzliche und/oder tierische Fette eingesetzt. Als Molkereiprodukte kommen beispielsweise Milch und/oder Sahne in pulvriger und/oder pastöser Form zur Anwendung. Als probiotisch wirksame Mikroorganismen werden die des Joghurt-Erzeugnisse herstellenden Typs oder des Sauermilch-Erzeugnisse herstellenden Typs eingesetzt, vorzugsweise der Gattung Lactobacillus (Lb) aus der Familie Lactobacillaceae, insbesondere Lb acidophilus, Lb bulgaricus, Lb johnsonii, Lb gasseri, Lb helveticus, Lb plantarum, Lb reuteri und/oder Lb sake. Als pflanzliche Bestandteile werden der Masse beispielsweise lyophilisierte grob- oder feinzerkleinerte Früchte, vorzugsweise Obst, Beeren, Mandeln, Nüsse oder Wildfrüchte, hinzugegeben. Als Gewürze und Aromen kommen vorzugsweise Pfefferminze, Vanille, Zitrone, Orange, Schwarze Johanna, Kirsche, Zimt, Nelken, Anis, Pistazien, Fenchel, Johanniskraut, Holunderblüten, Rosmarin, Ingwer und speziell für Überzüge von Kartoffelchips Thymian, Koriander, Curry, Zwiebel und Kümmel in Betracht. Als Emulgatoren finden natürliche Emulgatoren wie Phosphatide, Stearine und Fettalkohole sowie Lecithin Verwendung.

Zitronensäure, bevorzugt wasserfreie, wird als Säuerungsmittel der Masse hinzugegeben. Um den Wert der erfindungsgemäßen Masse zu erhöhen, sind Vitamine und Mineralien als weitere Zusatzstoffe Bestandteil der Masse. Weiterhin werden als geschmacksstarke und/oder nährstoffanreichernde Zusätze eiweißreiche Mikroorganismen, vorzugsweise der Gattung Spirulina, Kakao, Schokolade, Weißellarvensaft und Propolis-Extrakt der Masse zugegeben. Die Gewichtsteile der Ingredienzien werden je nach Geschmack, Verwendungszweck, bevorzugter Mindesthaltbarkeit, Konsistenz und Farbe aufeinander abgestimmt. Die Hauptbestandteile und die Zusatzstoffe sind je nach Verwendung der erfindungsgemäßen Masse untereinander austauschbar und kombinierbar.

Im Folgenden werden beispielhaft einige Rezepturen aufgeführt, deren Ingredienzien je nach gewünschter Konsistenz und Verwendungszweck, nämlich zum Füllen, Belegen oder Überziehen, in ihren Gewichtsteilen variierbar sind:

### Beispiel 1:

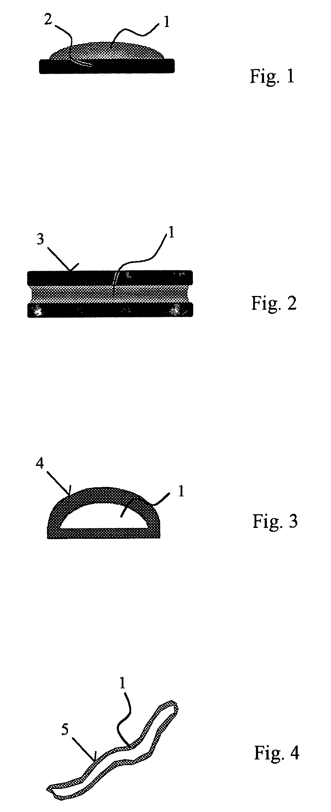

In diesem Ausführungsbeispiel ist die erfindungsgemäße Masse **1** als Belag auf Dauergebäck **2**, wie in Figur 1 dargestellt, vorgesehen und besteht aus folgenden Ingredienzien:

| | |
|---|---|
| 28,0 - 40,0 GWT | Saccharose |
| 5,0 - 10,0 GWT | Topinambur, konz., pulv. |
| 35,0 - 45,0 GWT | Pflanzenfett |
| 5,5 - 13,5 GWT | Joghurtpulver mit probiotischen Kei- |
| | men |
| 2,2 - 5,5 GWT | Milchpulver |
| 0,2 - 0,7 GWT | Lecithin |
| 0,01 - 0,2 GWT | Säuerungsmittel |
| 0,1 - 0,7 GWT | Gewürz und Aroma |
| 5,0 - 10,0 GWT | Kakaopulver |
| 10,0 - 15,0 GWT | Kakaobutter |

### Beispiel 2:

In diesem Ausführungsbeispiel ist die erfindungsgemäße Masse **1** als Füllung bzw. Einlage für ein sandwichartiges Gebäck **3**, wie in Figur 2 dargestellt, vorgesehen und besteht aus folgenden Ingredienzien:

| | |
|---|---|
| 41,5-46,5 GWT | Zucker |
| 35,1-45,6 GWT | Fette |
| 5,5-13,5 GWT | Joghurtpulver mit Lactobacillus |
| 2,4- 4,8 GWT | Sahnepulver |
| 0,1- 0,7 GWT | natürliches Aroma |
| 0,1- 0,9 GWT | Emulgator |
| 0,05- 0,2 GWT | Zitronensäure, wasserfrei |

### Beispiel 3:

In diesem Ausführungsbeispiel ist die erfindungsgemäße Masse **1** als Füllung einer Praline **4**, wie in Figur 3 dargestellt, vorgesehen und besteht aus folgenden Ingredienzien:

| | |
|---|---|
| 20,0 - 28,5 GWT | Saccharose |
| 20,0 - 28,5 GWT | Honig, eingedickt |
| 38,0 - 42,5 GWT | pflanzliches und Butterfett |
| 4,0 - 6,5 GWT | Joghurtpulver mit Lb acidophilus |
| 2,5 - 5,5 GWT | Milchpulver |
| 4,0 - 6,5 GWT | lyophilisierte gemahlene Früchte |
| 0,2 - 0,4 GWT | Vanillin |
| 0,1 - 0,6 GWT | Lecithin |
| 2,0 - 3,0 GWT | Spirulina |
| 0,1 - 0,3 GWT | weitere Aromen, je nach gewünschter Geschmacksrichtung |

### Beispiel 4:

In diesem Ausführungsbeispiel ist die erfindungsgemäße Masse **1** als Umhüllung für Kartoffelchips **5**, wie in Figur 4 dargestellt, vorgesehen und besteht aus folgenden Ingredienzien:

| | |
|---|---|
| 24,0-30,0 GWT | Saccharose |
| 35,0-44,5 GWT | pflanzliches Fett |
| 9,5-11,5 GWT | Joghurtpulver mit Lb bulgaricus |
| 3,6- 4,8 GWT | Molkereiprodukte, pulv. |
| 8,0-12,5 GWT | Kakaopulver |
| 0,2- 0,6 GWT | Emulgator |
| 0,1- 0,7 GWT | Aromen und Gewürze; je nach gewünschter Geschmacksrichtung |

In der vorliegenden Beschreibung wurde anhand von konkreten Ausführungsbeispielen die erfindungsgemäße Masse für Lebensmittel erläutert. Es sei aber vermerkt, dass die vorliegende Erfindung nicht auf die Einzelheiten der Beschreibung in den Ausführungsbeispielen beschränkt ist, da im Rahmen der Ansprüche Änderungen und Abwandlungen beansprucht werden.

## Patentansprüche

1. Masse zum Füllen, Belegen oder Überziehen von Lebensmitteln zur Förderung von körperlichem Wohlbefinden, bestehend aus den Hauptbestandteilen Süßmittel, Fett und Molkereiprodukte sowie probiotischen Mikroorganismen des Joghurt-Erzeugnisse herstellenden Typs und/oder des Sauermilch-Erzeugnisse herstellenden Typs.

2. Masse nach Anspruch 1, **dadurch gekennzeichnet, dass** die probiotischen Mikroorganismen des Joghurt-Erzeugnisse herstellenden Typs und/oder des Sauermilch-Erzeugnisse herstellenden Typs zur Gattung Lactobacillus (Lb) aus der Familie Lactobacillaceae gehören.

3. Masse nach Anspruch 1, **dadurch gekennzeichnet, dass** als Süßmittel Rohrzucker oder Rübenzucker, Honig, Sirupe, Fruchtzucker und/oder Topinambur in der Masse enthalten sind.

4. Masse nach Anspruch 1, **dadurch gekennzeichnet, dass** als Fett pflanzliche und/oder tierische Fette in der Masse enthalten sind.

5. Masse nach Anspruch 1, **dadurch gekennzeichnet, dass** als Molkereiprodukte vorzugsweise Milch und/oder Sahne in pulvriger und/oder pastöser Form in der Masse enthalten sind.

6. Masse nach Anspruch 1, **dadurch gekennzeichnet, dass** je nach beabsichtigtem Verwendungszweck der Masse Zusatzstoffe wie pflanzliche Bestandteile, Gewürze, Aromen, Emulgatoren, Säuerungsmittel, Vitamine, Mineralien und/oder eiweißreiche Mikroorganismen beigefügt sind.

7. Masse nach Anspruch 6, **dadurch gekennzeichnet, dass** als pflanzliche Bestandteile lyophilisierte grob oder fein zerkleinerte Früchte, vorzugsweise Obst, Beeren, Mandeln, Nüsse und/oder Wildfrüchte, in der Masse enthalten sind.

8. Masse nach Anspruch 6, **dadurch gekennzeichnet, dass** als Gewürze oder Aromen Pfefferminze, Vanille, Zitrone, Orange, Schwarze Johanna, Kirsche, Zimt, Nelken, Anis, Pistazien, Fenchel, Johanniskraut, Holunderblüten, Rosmarin, Ingwer, Thymian, Koriander, Curry, Zwiebel und/oder Kümmel in der Masse enthalten sind.

9. Masse nach Anspruch 6, **dadurch gekennzeichnet, dass** als Emulgatoren natürliche Emulgatoren wie Phosphatide, Stearine, Fettalkohole und/oder Lecithin in der Masse enthalten sind.

10. Masse nach Anspruch 6, **dadurch gekennzeichnet, dass** als Säuerungsmittel vorzugsweise Zitronensäure wasserfrei in der Masse enthalten ist.

11. Masse nach Anspruch 6, **dadurch gekennzeichnet, dass** als eiweißreiche Mikroorganismen die Gattung Spirulina in der Masse enthalten ist.

12. Masse nach einem oder mehreren der vorangegangenen Ansprüche, **dadurch gekennzeichnet, dass** in ihr weitere Zusätze, vorzugsweise Kakao, Schokolade, Weißellarvensaft und/oder Propolis-Extrakt, enthalten sind.

13. Masse nach einem oder mehreren der vorangegangenen Ansprüche, **dadurch gekennzeichnet, dass** die Hauptbestandteile untereinander austauschbar und kombinierbar in der Masse enthalten sind.

14. Masse nach einem oder mehreren der vorangegangenen Ansprüche, **dadurch gekennzeichnet, dass** die Zusatzbestandteile untereinander austauschbar und kombinierbar in der Masse enthalten sind.

15. Masse nach einem oder mehreren der vorangegangenen Ansprüche, **dadurch gekennzeichnet, dass** die Hauptbestandteile mit den Zusatzbestandteilen untereinander austauschbar und kombinierbar in der Masse enthalten sind.

16. Masse nach einem oder mehreren der vorangegangenen, **dadurch gekennzeichnet, dass** diese pro Gramm mindestens 10⁶ probiotischen Mikroorganismen des Joghurt-Erzeugnisse herstellenden Typs und/oder des Sauermilch-Erzeugnisse herstellenden Typs enthält.
